(19) Europäisches Patentamt
European Patent Office
Office européen des brevets

(11) EP 0 539 289 B1

(12) FASCICULE DE BREVET EUROPEEN

(45) Date de publication et mention de la délivrance du brevet: **10.01.1996 Bulletin 1996/02**

(51) Int Cl.6: **E21B 43/25**, E21B 33/138

(21) Numéro de dépôt: **92402875.6**

(22) Date de dépôt: **21.10.1992**

(54) **Utilisation de gels faibles comprenant du polyacrylamide et du glyoxal pour la réduction sélective de la perméabilité à l'eau**

Verwendung von Polyacrylamid und Glyoxal enthaltende Gelen zur selektiven Reduzierung der Wasserpermeabilität

Use of weak gels containing a polyacrylamide and glyoxale for selectively reducing water permeability

(84) Etats contractants désignés:
**DE GB IT NL**

(30) Priorité: **25.10.1991 FR 9113304**

(43) Date de publication de la demande:
**28.04.1993 Bulletin 1993/17**

(73) Titulaire: **INSTITUT FRANCAIS DU PETROLE**
**F-92502 Rueil-Malmaison (FR)**

(72) Inventeurs:
- **Zaitoun, Alain**
**F-76000 Rouen (FR)**
- **Kohler, Norbert**
**F-78300 Poissy (FR)**

(56) Documents cités:
**US-A- 4 155 405**
**US-A- 4 291 069**
**US-A- 4 461 351**
**US-A- 4 842 071**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1)Convention sur le brevet européen).

EP 0 539 289 B1

## Description

La présente invention est relative à de nouvelles formulations à base de gels faibles et leur utilisation pour réduire sélectivement la perméabilité à l'eau dans les zones très perméables de formations souterraines.

Les nouvelles formulations sont constituées d'un mélange en solution aqueuse de glyoxal et d'un polyacrylamide non ionique ou d'un copolymère d'acrylamide non ionique et non hydrolysé susceptibles de réagir pour donner lieu à la formation d'un gel faible au sein même de la formation à traiter et de réduire sélectivement la circulation de l'eau dans les zones de forte perméabilité sans pour autant empêcher celle des hydrocarbures.

Ces formulations présentent un intérêt particulièrement grand lorsque la formation est très perméable et lorsque la salinité et/ou la dureté de l'eau est élevée.

La récupération des hydrocarbures liquides ou gazeux de formations souterraines nécessite très fréquemment l'injection de grandes quantités d'eau dans les puits dits d'injection en vue d'améliorer l'efficacité de balayage des formations souterraines et la production desdits hydrocarbures à des puits dits de production. Dans les réservoirs hétérogènes, l'injection massive d'eau dans les puits favorise la production prématurée de cette eau aux puits de production par digitation à travers les zones de forte perméabilité laissant des parties importantes de plus faible perméabilité de ce réservoir non balayées et conduisant à une récupération inefficace des hydrocarbures.

Au niveau des puits de production, bien que dans certains cas des productions significatives d'hydrocarbures soient obtenues, la production d'eau qu'elle soit d'origine naturelle ou qu'elle provienne d'un puits d'injection d'eau, est parfois si élevée que la production d'hydrocarbures n'est plus économique.

Spécifiquement cette arrivée massive d'eau augmente les coûts de production par gas lift par exemple ainsi que les coûts de séparation des fluides, de traitement de l'eau et de son évacuation. Elle empêche par ailleurs l'écoulement des hydrocarbures vers le puits et aggrave les problèmes de formation de dépôts et de corrosion.

De nombreuses méthodes destinées à réduire la perméabilité à l'eau des formations très perméables ont été proposées et testées sur champ ; elles consistent en général à introduire dans la formation, au niveau de la zone à isoler, soit un ciment, soit une suspension de particules solides ou de paraffines, soit encore des résines (US 4,461,351). Ces méthodes présentent le désavantage de ne pas être sélectives et de bloquer presque autant la circulation des hydrocarbures que celle de l'eau.

Plus récemment on a proposé l'emploi de gels ioniques ou covalents de différents polymères hydrosolubles. Parmi ces derniers des polymères vinyliques tels que le polyacrylamide et l'alcool polyvinylique ainsi que leurs copolymères, des polysaccharides tels que la gomme xanthane ou les gommes de galactomannane, des dérivés cellulosiques tels que la carboxyméthylcellulose ou l'hydroxyéthylcellulose.

Parmi les réticulants ioniques ou covalents permettant d'initier la formation d'un gel, citons les dérivés et complexes de certains cations multivalents tels que ceux du bore, du chrome, de l'aluminium, du fer et de divers métaux de transition ainsi que des composés organiques plurifonctionnels tels que des dialdéhydes, des diamines ou des di-alcools.

Il a été constaté que cette réticulation sous forme de gels compacts, si elle entraîne bien la réduction de la perméabilité à l'eau, présente néanmoins l'inconvénient d'affecter également dans une grande mesure la perméabilité aux hydrocarbures.

Parmi les polymères hydrosolubles, les polyacrylamides et en particulier les polyacrylamides hydrolysés, soit seuls soit sous forme de gels, sont utilisés fréquemment pour réduire la perméabilité à l'eau des formations souterraines. Leur mécanisme d'action est compris de la manière suivante : le polymère injecté dans le milieu poreux sous forme de solution aqueuse, s'adsorbe à la surface du solide et réduit le diamètre des pores du milieu poreux par gonflement au contact de l'eau ; de ce fait les polymères sont capables de freiner la circulation de l'eau. Par contre, les fluides non aqueux tels que l'huile ou le gaz ne gonflent pas les macromolécules adsorbées qui, de ce fait, laissent la voie libre à l'écoulement de ces fluides.

Des exemples illustrant le mode d'emploi des polyacrylamides hydrolysés pour ce type d'application sont décrits dans le brevet des Etats-Unis d'Amérique n° 4,095,651 de la demanderesse.

L'utilisation des polyacrylamides hydrolysés pour réduire la perméabilité à l'eau des formations souterraines est toutefois limitée dès que la salinité de l'eau et en particulier leur teneur en ions bivalents devient élevée.

De ce fait, plus récemment, il a été proposé de remplacer les polyacrylamides hydrolysés par des polyacrylamides non hydrolysés. Ces derniers s'avèrent en effet supérieurs d'emploi au précédents du fait de leur plus grande tolérance aux sels et de leur pouvoir d'adsorption plus élevé sur la roche réservoir.

Le brevet des Etats-Unis d'Amérique n° 4,842,071 préconise par exemple pour la réduction sélective des venues d'eau aux puits de production l'injection simultanée ou consécutive d'un polymère ou copolymère non ionique de l'acrylamide et d'un agent basique. Le polyacrylamide non hydrolysé s'adsorbe fortement sur la roche réservoir et l'agent basique provoque le gonflement in situ du polymère adsorbé. Ce procédé s'avère efficace pour freiner la circulation de l'eau tant que la teneur en ions plurivalents de cette eau et/ou la température du réservoir ne sont pas trop élevées.

La présente invention consiste en une amélioration de l'utilisation des polyacrylamides non hydrolysés et consiste en l'injection dans les puits de solutions aqueuses de polyacrylamide non ionique ou d'un copolymère d'acrylamide non

ionique et non hydrolysé et de glyoxal, ce dernier composé ayant la propriété de réagir in situ avec le polymère adsorbé sur la roche réservoir. Contrairement à l'utilisation d'un agent basique conformément au brevet des Etats Unis d'Amérique n° 4,842,071 déjà cité et qui se traduit par une transformation chimique progressive du polyacrylamide non hydrolysé en polyacrylamide hydrolysé sensible à la teneur en sel de l'eau, l'addition d'un composé dialdéhydique à ce même polyacrylamide non hydrolysé donne lieu à une réaction d'addition du dialdéhyde aux fonctions amides, ce qui préserve l'insensibilité aux sels du polymère de base et entraîne de plus un épaississement sensible de la solution aqueuse au cours du temps avec formation d'un gel.

Ces réactions d'addition entre le glyoxal et la fonction amide peuvent être décrites de la façon suivante :

1) Le glyoxal se dissout dans l'eau en formant des hydrates non volatils

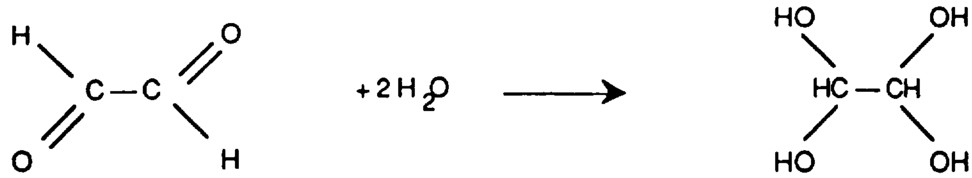

2) Ce dernier composé s'additionne aux amides primaires en milieu neutre à faiblement alcalin :

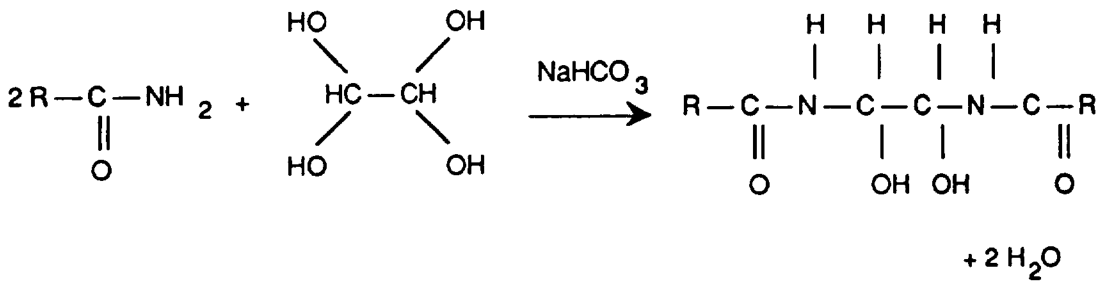


3) Lorsque cette réaction a lieu avec 2 molécules du polyacrylamide il se forme un gel par pontage intermédiaire.

4) Notons qu'en milieu alcalin de pH supérieur à 8 le glyoxal subit la réaction de Cannizzaro transformant le glyoxal en glycolate d'autant plus rapidement que la température est élevée :

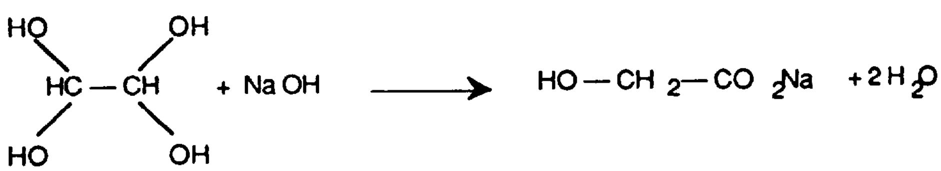

Cette réaction fragilise très fortement les liaisons existant entre le composé aldéhydique et le polyacrylamide non ionique et conduit à terme à la régénération du polymère de départ et, s'il s'agit de gels, à la libération d'eau, phénomène connu sous le nom de synérèse.

L'utilisation de compositions à base de polyacrylamides et de dialdéhydes pour le traitement des venues d'eau dans les puits est déjà bien connue :

Le brevet des Etats Unis d'Amérique n° 4,155,405 préconise l'utilisation d'un polymère d'acrylamide réticulé à l'aide d'un dialdéhyde pour former un gel in situ et réaliser ainsi l'imperméabilisation totale de la formation souterraine à toute venue d'eau dans le puits. Un des facteurs essentiels dans la gélification suivant cette invention est le nombre de groupes aldéhydiques -CHO mis en présence du polymère par groupe amide -CONH2 présent. Le gel se forme en général plus rapidement et présente les meilleures caractéristiques lorsque le rapport entre les deux groupes est stoechiométrique à savoir une mole de dialdéhyde pour deux moles d'amide, le rapport R (mole dialdéhyde/mole d'amide) étant alors de 0,5. Une gélification fort acceptable est encore obtenue si le rapport R est de 0,2. Selon ce brevet, en dessous de ce rapport R = 0,2 il ne se forme aucun gel.

Par ailleurs, le brevet US 4,291,069 décrit un procédé pour rendre imperméables au passage de liquides aqueux, des structures poreuses selon lequel on introduit un polymère contenant une fonction amide tel que le polyamide et un dialdéhyde tel que le glyoxal à un pH supérieur à 7,5, de façon à obtenir la formation d'un gel entre 15 et 60 secondes.

L'inconvénient majeur de l'utilisation de gels conformément à ces brevets est de réaliser l'imperméabilisation totale de la formation souterraine à la circulation de tout fluide et donc en particulier de celle des hydrocarbures.

Le brevet des Etats-Unis d'Amérique n° 4,782,900 recommande l'utilisation de gels aqueux constitués d'une part de polyacrylamides aminoalkylés et de leurs copolymères contenant de 0 à 30 % de groupes chargés soit cationiques soit anioniques et d'autre part d'aldéhydes ou de dialdéhydes pour la réduction des venues d'eau aux puits de production. Pour assurer la solubilité de ce type de polymère dans l'eau il faut tout d'abord que le groupe N alkylsubstitué s'il est en proportion importante soit un groupe méthyle et/ou que des charges soient présentes dans le polymère. Par ailleurs les conclusions de non sélectivité d'un gel énoncées ci-dessus s'appliquent naturellement également à ce type de gel.

La présente invention répond à ce problème technique et montre de façon totalement inattendue que le produit de réaction d'un polyacrylamide non hydrolysé ou d'un copolymère non ionique d'acrylamide et de glyoxal, dans un rapport molaire R dialdéhyde/amide inférieur à 0,2, donne non seulement lieu à la formation d'un gel mais que si ce mélange est injecté dans une formation souterraine de forte perméabilité il permet de réduire efficacement la perméabilité à l'eau d'une partie au moins de cette formation sans que sa perméabilité aux hydrocarbures en soit sensiblement affectée.

De manière plus précise, l'invention concerne un procédé de récupération améliorée d'hydrocarbures par réduction sélective de la perméabilité à l'eau dans au moins une partie d'une formation souterraine productrice desdits hydrocarbures, selon lequel on injecte par au moins un puits injecteur ou au moins un puits producteur un dialdéhyde et une solution aqueuse d'un polyacrylamide non ionique ou d'un copolymère d'acrylamide non ionique et non hydrolysé avec au moins un autre comonomère, dans des conditions adéquates, ledit copolymère contenant moins de 5 % de groupements N-alkylsubstitués, on stoppe l'injection dans la formation pendant un temps suffisant permettant in situ la formation par réticulation d'un gel approprié, et l'on injecte de l'eau dans le puits injecteur s'il s'agit d'un puits injecteur ou l'on remet le puits en production s'il s'agit d'un puits producteur, le procédé étant de plus caractérisé par ce qu'on effectue la réticulation par l'injection d'une quantité de glyoxal telle que le rapport molaire glyoxal/polyacrylamide ou copolymère d'acrylamide soit inférieur à 0,2.

Le polymère préféré de l'invention est un polyacrylamide non ionique de haut poids moléculaire. Par composé non ionique, on exclut la présence en proportion substantielle, inférieure à 10 % et de préférence à 5 %, d'acide polyacrylique soit sous forme anionique avec les ions de métaux alcalins ou alcalino-terreux, soit sous forme cationique avec l'ion ammonium.

Par non hydrolysé, on exclut la présence de monomères hydrolysés en proportion substantielle, par exemple moins de 10 %, avantageusement moins de 5 % et de préférence de 0 à 1 %.

Avantageusement, le copolymère peut contenir de 0 à 4 % de groupements N-alkylsubstitués. Le comonomère selon l'invention est généralement non saturé tel que par exemple la N-vinylpyrrolidone, le styrène, l'acrylonitrile, l'acroléine ou divers éthers ou esters vinyliques comme l'acétate de vinyle, l'acrylate d'alkyle, de préférence de méthyle, l'acrylate de glycidyle, l'acrylate d'hydroxy-alkyle, le méthacrylate d'alkyle, de préférence de butyle, le méthacrylate d'hydroxy-alkyle.

Du fait de leur caractère essentiellement non-ionique le polyacrylamide non hydrolysé ou ses copolymères sont compatibles avec toutes sortes d'eaux, indifféremment de leur composition minéralogique, particulièrement en ions monovalents ou divalents, et développent une viscosité pratiquement indépendante de la teneur en sels. Par ailleurs, en raison de leur caractère non ionique, le polyacrylamide non hydrolysé ou ses copolymères ont davantage tendance à s'adsorber à la surface le plus souvent chargée négativement des minéraux de la formation.

Enfin on note un gonflement sélectif en présence d'eau du polymère ou copolymère adsorbé et une absence de gonflement en présence d'hydrocarbures.

Le poids moléculaire du polymère ou copolymère est avantageusement élevé, par exemple de 500.000 à 20.000.000 et de préférence de 2.000.000 à 15.000.000.

La concentration en polymère dans la solution aqueuse est habituellement comprise entre 500 et 50.000 ppm (parties par million) en poids et de préférence entre 1000 et 6000 ppm en poids.

Le glyoxal, de formule OHC-CHO, utilisable selon l'invention, est hydrosoluble.

Un des facteurs essentiels dans la réaction d'addition suivant l'invention est le nombre de groupes dialdéhydes-($CHO_2$) mis en présence de groupes amides-$CONH_2$. Pour un rapport molaire dialdéhyde/amide supérieur à 0,2, un gel élastique et compact se forme, qui, s'il est injecté dans une formation souterraine réduit aussi bien la perméabilité à l'eau que celle aux hydrocarbures et n'est donc pas sélectif. Au contraire, conformément à la présente invention, si l'on utilise un mélange dialdéhyde/amide inférieur à 0,2, par exemple compris entre 0,001 et 0,195 et de préférence entre 0,002 et 0,1 il se forme un gel faible de bonnes caractéristiques et qui lui, est sélectif.

Un autre facteur essentiel est le pH optimum de réaction en général compris entre 4 et 11. Il est avantageusement compris entre 5,5 et 7,5 lorsque l'on utilise l'homopolymère d'acrylamide et pour des raisons d'instabilité chimique du glyoxal en pH alcalin (réaction de Cannizzaro), on préférera en général travailler à un pH inférieur à 7,5 et en particulier entre 6 et 7.

Le pH optimum de réaction est généralement choisi de telle façon que le temps, nécessaire à la formation du gel soit d'au moins 12 heures, par exemple de 12 à 120 heures et de préférence de 15 à 72 heures.

La réaction de gélification entre le polymère ou le copolymère non ionique d'acrylamide et le glyoxal est généralement insensible à la salinité de l'eau et à la nature des sels ce qui rend le système particulièrement attractif pour l'utilisation dans les formations où circulent des eaux fortement chargées en sel (par exemple de 20 g/l à plus de 200 g/l en équivalent NaCl).

La cinétique de gélification est fonction du pH et de la température de la formation. En règle générale plus la température est élevée, plus rapide est la formation du gel. Néanmoins l'hydrolyse du polymère, c'est-à-dire la transformation chimique des groupes amides en groupes acides, ayant lieu de manière spontanée à pH neutre lorsque la température dépasse 80°C, la réaction entre le polymère et le glyoxal ne se fait que difficilement et aucun gel ne se forme ou s'il est déjà formé apparaît le phénomène de synérèse. Dans ces conditions une température de 80°C peut être considérée comme une température limite pour cette formulation et son utilisation. La formulation s'applique donc à une formation dont la température est de 10 à 80°C et de préférence 20 à 70°C.

L'injection du polymère et du glyoxal dans la formation peut s'effectuer simultanément ou bien celle du glyoxal peut être réalisée après celle du polymère. De préférence, on injecte le polymère et le glyoxal simultanément.

En général, on arrête toute injection de fluide par le puits vers la formation pendant un temps plus ou moins long directement fonction du rapport R, ce qui permet d'une part au polymère non ionique de s'adsorber sur la roche réservoir et permet d'autre part à la réaction lente d'addition du groupe dialdéhydique aux fonctions amides d'aller à son achèvement et de former un gel faible in situ. Lorsqu'on remet le puits en production d'huile et/ou de gaz s'il s'agit d'un puits producteur, la circulation de l'huile et/ou du gaz à travers cette partie de la formation imprégnée par la solution aqueuse de polymère et le glyoxal n'est pas sérieusement modifiée par rapport à ce qu'elle était avant traitement tandis que la circulation de l'eau est freinée.

De même s'il s'agit d'un puits injecteur d'eau, après mise en place du polymère et du glyoxal dans la formation et le temps d'arrêt d'injection de tout fluide par le puits vers la formation, on procède à nouveau à l'injection d'eau qui se trouve de ce fait détournée des zones de la formation où le gel s'est mis en place.

Le procédé permet donc une meilleure récupération de l'huile et/ou du gaz.

Les exemples non limitatifs qui suivent illustrent certains aspects de la présente invention :

**Tests en éprouvettes**

***Exemple 1***

Dans une eau de salinité globale 52,5 g/l à un pH de 7,2 on disperse 3 g/l de polyacrylamide non hydrolysé de poids moléculaire 7 x $10^6$ daltons. La viscosité relative au plateau newtonien de cette solution mesurée à l'aide d'un viscosimètre LS 30 de la Société Contraves est trouvée égale à 14.

A cette solution et à la température de 25°C on ajoute des concentrations croissantes de glyoxal commercial (40 % de matière active) et on suit la viscosité de chacune de ces solutions pendant 10 jours. Le tableau 1 rassemble en fonction des concentrations croissantes en glyoxal pur et du rapport molaire R glyoxal/acrylamide l'évolution des viscosités relatives de la solution de polymère après 72 heures.

On constate que même pour un rapport R glyoxal/acrylamide inférieur à 0,2 les augmentations de viscosité peuvent être élevées et que pour un rapport molaire R = 0,033 un gel visible à l'oeil nu se forme. On constate de plus si l'on suit l'évolution des viscosités au cours du temps que la réaction entre le polymère et le glyoxal est complétée au bout de 72 heures, la viscosité des différents mélanges n'évoluant plus, tout le glyoxal ayant réagi avec le polymère. Pour un rapport R = 0,078 il n'y a pas non plus de phénomène de synérèse après 10 jours.

L'évaluation de la cinétique de gélification au cours du temps peut se faire à l'aide d'un test de filtration. Ce test consiste à injecter en continu un mélange polymère/glyoxal à un débit constant de 12 ml/h ($\gamma = 20\ s^{-1}$) à travers des filtres Sartorius de 12 µm et à mesurer l'évolution de la perte de charge (en grammes) aux bornes de ces filtres.

Tableau 1

Evolution à 25°C de la viscosité relative $\mu_{ro}$ d'une solution de polyacrylamide en fonction de la concentration en glyoxal

| Concentration en glyoxal pur (ppm) | Rapport molaire glyoxal/acrylamide | $\mu_{ro}$ | Caractéristiques du mélange |
|---|---|---|---|
| 0 | 0 | 12 | |
| 4 | 0,00165 | 15 | augmentation de viscosité |
| 8 | 0,0033 | 20 | |
| 40 | 0,0165 | 32 | |
| 80 | 0,032 | 1150 | gel visible à l'oeil nu |
| 200 | 0,078 | > 5000 | |

Pour un rapport molaire R = 0,0078 au temps to, juste après le mélange du polymère et du glyoxal ($\mu_{ro}$ = 12), la perte de charge est quasi-négligeable, au temps to + 16 heures ($\mu_{ro}$ = 1850) la perte de charge atteint une valeur proche de 400 g alors qu'au temps to + 24 h ($\mu_{ro}$ > 5000) la perte de charge est supérieure à 1000 g.

En fonction de l'effet souhaité lors des tests en milieu poreux ou lors des essais sur puits il est ainsi possible de contrôler le temps de réaction et d'arriver à un temps donné à la viscosité ou à la consistance souhaitée.

En règle générale plus le rapport R est élevé plus rapide est la réaction de gélification. On peut également montrer que si le rapport R est supérieur à 0,2 par exemple égal à 0,25, les viscosités et consistances des gels obtenus sont tellement élevées qu'il n'est plus possible de réaliser le test de filtration dans les conditions ci-dessus, les pertes de charge devenant par trop élevées.

***Exemple 2***

En vue d'étudier l'influence du pH sur la cinétique de gélification on réalise l'expérience suivante : dans une eau de salinité 50 g/l en NaCl on dissout 3 g/l de polyacrylamide non hydrolysé poudre de poids moléculaire 11 x $10^6$ daltons. A la solution obtenue de pH 6,7 on ajoute tout d'abord 50 ppm de glyoxal pur (R = 0,02) et l'on mesure le temps pour l'obtention d'une solution épaissie de viscosité $\mu_{ro}$ = 58 à comparer à $\mu_{ro}$ = 25 pour le polymère seul (tableau 2).

On ajuste le pH du mélange aux valeurs respectives de 7,5 et 8,2 par addition de phosphate de sodium et l'on mesure le temps nécessaire pour obtenir la même viscosité $\mu_{ro}$ = 58-60 pour le mélange. On constate que le temps de réaction à 30°C diminue avec l'augmentation du pH. Dans tous les cas on obtient un gel faible dont la viscosité n'évolue pratiquement plus après 3 jours.

Tableau 2

| Effet du pH sur la cinétique de formation d'un gel faible (R = 0,02) | |
|---|---|
| pH | Temps de gélification (heures) |
| 6,7 | 36 |
| 7,5 | 22 |
| 8,2 | 18 |

***Exemple 3***

Cet exemple est destiné à illustrer les différences entre les formulations de l'invention et celles correspondant à l'art antérieur (brevet des Etats Unis d'Amérique n° 4,155,405).

On reproduit l'exemple 2 à l'exception de la quantité de glyoxal pur qui passe à 1500 ppm ce qui donne un rapport molaire R = 0,595.

Le tableau 3 montre que pour toutes les valeurs de pH on obtient un gel fort correspondant à une prise en masse et qu'à pH élevé, supérieur à 7,5, non seulement la gélification est très rapide mais les gels formés ne sont pas stables et subissent une réaction de synérèse (libération d'eau) par suite de la réaction de Cannizzaro.

Tableau 3

| Effet du pH sur la cinétique de formation d'un gel fort (R = 0,595) | | |
|---|---|---|
| pH | Temps de prise (heures) | Aspect du gel |
| 7,3 | 36 | gel fort, stable |
| 7,82 | 12 | gel fort, synérèse |
| 8,6 | immédiat | synérèse après 12 h |

Lorsque l'on soumet le mélange contenant 3 g/l de polyacrylamide et 1500 ppm de glyoxal pur au test de filtration à travers des filtres Sartorius de 12 µm et à un débit de 12 ml/h on constate que les pertes de charge aux bornes du filtre croissent très fortement dès l'injection du mélange, sans jamais se stabiliser, et finalement le filtre se colmate par suite de la formation d'un gel fort.

**Tests en milieu poreux**

***Exemples 4 à 8***

Les exemples qui suivent sont destinés à comparer sur un même milieu poreux l'effet d'une formulation selon l'invention avec un rapport R < 0,2 à celui d'une formulation selon l'art antérieur avec un rapport R > 0,2.

***Exemple 4***

La première expérience de mise en place des formulations selon l'invention a été effectuée sur un massif de sable d'Entraigues EN 38 reconstitué dans une cellule en acier inoxydable Hastelloy, le tout placé dans une étuve à 30°C.

La perméabilité initiale $k_{Wi}$ à l'eau (50 g/lNacl) de ce massif a été trouvée égale à 2,37 D. On met le massif en saturation en huile résiduelle en injectant successivement un mélange d'hydrocarbures ($\mu$ = 24,7 mPa.s à 30°C) puis à nouveau de la saumure. La perméabilité à l'eau en présence d'huile résiduelle $k_{SOR}$ est trouvée égale à 1,16 D.

On procède ensuite tout d'abord à l'injection d'une solution de polyacrylamide non hydrolysé (Cp = 3000 ppm, $\mu_o$ = 30 mPa.s) dans l'eau 50 g/l NaCl au débit q = 20 ml/h à un pH de 7 et à la température de 30°C. Cette injection de polymère est suivie d'une injection d'eau pour déplacer l'excès de polymère et l'on mesure les valeurs de réduction de perméabilité à l'eau $R_{KW1}$ à différents débits, reportés sur le tableau 4.

On recommence le même cycle opératoire en injectant successivement dans le massif dans une eau de même salinité, pH et température, un mélange constitué de 3 g/l de polyacrylamide non hydrolysé et de 50 ppm de glyoxal pur (R = 0,02), puis un mélange constitué de 3 g/l de polyacrylamide non hydrolysé et de 80 ppm de glyoxal pur (R = 0,031). Après chaque mélange injecté on arrête toute circulation de fluide pendant 48 heures pour permettre à la réaction de gélification de se faire in situ, on déplace l'excédent de gel par l'eau et l'on mesure les valeurs de réduction de perméabilité à l'eau respectivement $R_{KW2}$ et $R_{KW3}$ qui sont également reportées sur le tableau 4 en fonction du débit d'injection d'eau.

Tableau 4

| Réductions de perméabilité à l'eau après polymère seul ($R_{KW1}$), après polymère + 50 ppm glyoxal pur ($R_{KW2}$) et après polymère + 80 ppm glyoxal pur ($R_{KW3}$) Sable d'Entraigues ($k_{SOR}$ = 1,16 D, 30°C) | | | |
|---|---|---|---|
| Débit q (ml/h) | $R_{KW1}$ polymère seul 3 g/l | $R_{KW2}$ polymère 3 g/l + glyoxal 50 ppm | $R_{KW3}$ polymère 3 g/l + glyoxal 80 ppm |
| 10 | 2,1 | 86 | 320 |
| 20 | 3,8 | 130 | 442 |
| 30 | 5,2 | 172 | 586 |
| 40 | 6,3 | 196 | 621 |

On constate que la mise en place d'un gel faible conformément à l'invention a pour effet de diminuer de manière considérable la perméabilité à l'eau par rapport au polymère seul.

De plus si l'on procède finalement à l'injection d'huile au débit q = 400 ml/h on trouve une valeur de perméabilité relative à l'huile $k_{ro}$ = 0,21 pour une saturation en eau $S_w$ = 0,4 à comparer avec une valeur initiale $k_{ro}$ = 0,23 pour la même valeur de saturation en eau. La perméabilité relative à l'huile n'est par conséquent que très faiblement affectée par la présence de gel. La formulation selon l'invention est donc sélective en réduisant fortement la perméabilité relative à l'eau sans altérer dans une grande mesure la perméabilité relative à l'huile.

***Exemple 5***

L'expérience précédente est requise en utilisant un massif de sable d'Entraigues EN 38 dont la perméabilité initiale à l'eau est trouvée égale à 3,7 D. On met le massif en saturation d'huile résiduelle en injectant un mélange 80/20 d'huile de vaseline/dodécane ($\mu$ = 21,5 mPa.s à 40°C) puis à nouveau de l'eau contenant 50 g/l NaCl. La perméabilité à l'eau en huile résiduelle $k_{SOR}$ est trouvée égale à 1,44 D ($k_{rw}$ = 0,39).

On injecte à un pH de 6,9 un mélange (R = 0,107) contenant 5 g/l de polyacrylamide non hydrolysé et 1250 ppm de solution commerciale à 35 % de glyoxal ($C_{glyoxal\ pur}$ = 0,44 g/l). Après une durée de vieillissement à 40°C de 21 heures on procède successivement à l'injection d'eau puis à l'injection d'huile à différents débits.

Le tableau 5 rassemble les valeurs de réduction de perméabilité à l'eau et à l'huile pour différentes valeurs du gradient de cisaillement $\gamma$. Le gradient de cisaillement $\gamma$ en milieu poreux est calculé de la façon suivante :

$$\gamma = \frac{4v}{r}$$

où v est la vitesse superficielle calculée par:

$$v = \frac{4q}{S\varphi\ (1 - S_{or})}$$

où q est le débit d'injection, S la surface de la face d'entrée du milieu poreux,
$\varphi$ la porosité.
r le rayon moyen des pores calculé par:

$$r = \left(\frac{8k \times k_{rw}}{\varphi\ (1 - S_{or})}\right)^{1/2}$$

où k est la perméabilité initiale à l'eau et $k_{rw}$ la perméabilité relative à l'eau pour une saturation résiduelle en huile $S_{or}$.

Tableau 5

| Réductions de perméabilité à l'eau $R_{KW}$ et à l'huile $R_{KO}$ après mise en place d'un mélange polyacrylamide-glyoxal (R = 0,107) Sable d'Entraigues ($k_{SOR}$ = 1,44 D, 40°C) | | |
|---|---|---|
| Gradient de cisaillement $\gamma$ ($s^{-1}$) | $R_{KW}$ | $R_{KO}$ |
| 9,2 | 83 | 3,4 |
| 18,4 | 81 | 2,8 |
| 36,8 | 90 | 2,6 |
| 73,6 | 105 | 2,2 |
| 92 | 121 | 2,1 |

On constate que la perméabilité à l'eau est beaucoup plus réduite que la perméabilité à l'huile (rapport 25 à 60 environ) par suite de la mise en place du gel selon l'invention.

***Exemple 6***

Les expériences précédentes sont reprises en utilisant cette fois une carotte de carbonate de St Waast-les-Mello dont la perméabilité initiale à l'eau contenant 30 g/l de KCl, 3 g/l de $CaCl_2.2H_2O$ et 2 g/l de formaldéhyde a été trouvée égale à 1 Darcy. On met le massif en saturation d'huile résiduelle en injectant un mélange 80/20 d'huile de vaseline/dodécane ($\mu$ = 21 m.Pa.s à 32°C) puis à nouveau de la saumure. La perméabilité à l'eau en huile résiduelle $k_{SOR}$ est trouvée égale à 120 mD ($k_{rw}$ = 0,12).

On injecte à un pH de 6,9 un mélange contenant 5 g/l de copolymère non ionique 50/50 d'acrylamide et de N-vinylpyrrolidone et 50 ppm de glyoxal pur (R = 0,020). Après une durée de vieillissement à 32°C de 16 heures on procède à l'injection de saumure jusqu'à déplacement complet du polymère non adsorbé et l'on mesure les valeurs de réduction de perméabilité à l'eau Rk pour différents débits d'injection d'eau. Ces valeurs sont comprises entre 12 et 8 pour des débits limites respectifs de 2 $cm^3$/h et 30 $cm^3$/h.

On procède ensuite à l'injection d'huile jusqu'à une saturation limite en eau résiduelle $S_w$ = 0,5 et on mesure une perméabilité relative à l'huile $k_{ro}$ = 0,56 à comparer avec la valeur initiale de perméabilité relative $k_{ro}$ = 0,63 obtenue avant mise en place du gel. Le système est donc sélectif en réduisant la perméabilité à l'eau sans affecter sensiblement la perméabilité à l'huile.

***Exemple 7***

Cet exemple est destiné à montrer la non sélectivité des formulations selon l'art antérieur (brevet Etats Unis d'Amérique n° 4,155,405). Un massif de sable d'Entraigues est conditionné de la même façon que dans l'exemple 5 avec une saumure contenant 50g/l de NaCl et le même mélange d'hydrocarbures ($\mu$ = 21,5 m.Pa.s à 40°C). Le pH est fixé à 8. Les perméabilités à l'eau sont trouvées égales respectivement à 3 D ($k_{wi}$) et 1,37 D ($k_{SOR}$).

On procède à l'injection, au débit q = 20 $cm^3$/h de 6 volumes de pore d'un mélange contenant 5000 ppm de polyacrylamide non hydrolysé et 1250 ppm de glyoxal pur (préparé à partir d'une solution commerciale à 35 %), eau 50 g/l

NaCl, pH 8, 40°C (R = 0,306). On laisse la réaction se faire pendant 20 heures à cette température. On procède ensuite à l'injection d'eau et l'on constate que le milieu poreux est complètement bouché.

Le gel formé selon l'art antérieur s'avère être un colmatant total.

***Exemple 8***

L'expérience précédente est renouvelée en utilisant cette fois le glutaraldéhyde comme agent réticulant conformément à l'art antérieur.

Dans un massif de sable d'Entraigues ($k_{wi}$ = 2,77 D, $k_{SOR}$ = 0,97 D) on injecte 10 volumes de pore d'un mélange contenant dans l'eau 50/l de NaCl à pH 10,5 et à 30°C, 3 g/l de polyacrylamide non hydrolysé et 200 ppm de glutaraldéhyde pur préparé à partir d'une solution commerciale à 25 % (R = 0,047). On arrête toute injection de fluide pendant 48 heures. On procède ensuite à l'injection d'eau et l'on constate que le milieu poreux est complètement colmaté.

**Revendications**

**1.** Procédé de récupération améliorée d'hydrocarbures par réduction sélective de la perméabilité à l'eau dans au moins une partie d'une formation souterraine productrice desdits hydrocarbures, selon lequel on injecte par au moins un puits injecteur ou au moins un puits producteur du glyoxal et une solution aqueuse d'un polyacrylamide non ionique ou d'un copolymère d'acrylamide non ionique et non hydrolysé avec au moins un autre comonomère, dans des conditions adéquates, ledit copolymère contenant moins de 5 % de groupements N-alkylsubstitués, on stoppe l'injection dans la formation pendant un temps suffisant permettant in situ la formation par réticulation d'un gel approprié, et l'on injecte de l'eau dans le puits injecteur s'il s'agit d'un puits injecteur ou l'on remet le puits en production s'il s'agit d'un puits producteur, le procédé étant caractérisé en ce qu'on effectue la réticulation à un pH inférieur à 7,5 par l'injection d'une quantité de glyoxal telle que le rapport molaire glyoxal/polyacrylamide ou copolymère d'acrylamide soit inférieur à 0,2.

**2.** Procédé selon la revendication 1 dans lequel le pH de la solution au moment de la réticulation est compris entre 5,5 et 7,5, de préférence entre 6 et 7 et dans lequel il est choisi de telle façon que le temps nécessaire à la formation du gel soit d'au moins 12 heures et de préférence de 15 à 72 heures.

**3.** Procédé selon la revendication 1 ou 2 dans lequel le rapport molaire glyoxal/polyacrylamide ou copolymère d'acrylamide est compris entre 0,002 et 0,1.

**4.** Procédé selon l'une des revendications 1 à 3 dans lequel le comonomère est un composé non saturé choisi dans le groupe formé par la N-vinylpyrrolidone, le styrène, l'acétate de vinyle, l'acrylate d'alkyle, l'acrylate de glycidyle, l'acrylate d'hydroxyalkyle, le méthacrylate d'alkyle, le méthacrylate d'hydroxyalkyle, l'acrylonitrile et l'acroléine.

**5.** Procédé selon l'une des revendications 1 à 4 dans lequel le polymère ou le copolymère a une masse molaire de 500.000 à 20.000.000 et dans lequel il est utilisé à une concentration de 500 à 50.000 parties par million dans la solution aqueuse, exprimée en poids.

**6.** Procédé selon l'une des revendications 1 à 5 dans lequel la solution aqueuse contient l'homopolymère d'acrylamide.

**7.** Procédé selon l'une des revendications 1 à 6 dans lequel la solution est injectée dans une formation dont la température est de 10 à 80°C et de préférence de 20 à 70°C.

**8.** Procédé selon d'une des revendications 1 à 7 dans lequel la teneur en sel de la formation est de 20 à 200 g/l exprimée en NaCl.

**Patentansprüche**

**1.** Verfahren zur verbesserten Gewinnung von Kohlenwasserstoffen durch selektive Verminderung der Wasserdurchlässigkeit in wenigstens einem Teil einer unterirdischen Förderformation der Kohlenwasserstoffe, gemäß welchem man durch wenigstens eine Injektionsbohrung oder wenigstens eine Förderbohrung Glyoxal und eine wäßrige Lösung eines nichtionischen Polyacrylamids oder eines nichtionischen und nicht hydrolysierten Acrylamid-Copolymeres mit wenigstens eines weiteren Comonomers unter geeigneten Bedingungen injiziert, wobei das Copolymer

wenigstens 5 % N-Alkyl-substituierte Gruppen enthält, man die Injektion in die Formation während einer ausreichenden Zeit abstellt, welche in situ die Bildung durch Vernetzung eines geeigneten Gels erlaubt und man Wasser in die Injektionsbohrung injiziert, wenn es sich um eine Injektionsbohrung handelt, oder man die Bohrung wieder zum Fördern bringt, wenn es sich um eine Förderbohrung handelt, wobei das Verfahren dadurch gekennzeichnet ist, daß man die Vernetzung bei einem ph-Wert unterhalb von 7,5 durch Injektion einer Menge an Glyoxal bewirkt, so daß das molare Verhältnis Glyoxal/Polyacrylamid oder Acrylamid-Copolymer unter 0,2 liegen wird.

**2.** Verfahren nach Anspruch 1, worin der ph-Wert der Lösung im Moment der Vernetzung zwischen einschließlich 5,5 und 7,5, bevorzugt zwischen 6 und 7, enthalten ist und worin er in der Weise ausgewählt wird, daß die für die Bildung des Gels erforderliche Zeit wenigstens 12 Stunden, und bevorzugt 15 bis 72 Stunden, betragen wird.

**3.** Verfahren nach Anspruch 1 oder 2, worin das molare Verhältnis Glyoxal/Polyacrylamid oder Acrylamid-Copolymer zwischen einschließlich 0,02 und 0,1 enthalten ist.

**4.** Verfahren nach einem der Ansprüche 1 bis 3, worin das Comonomer eine nichtgesättigte Verbindung ist, die aus der Gruppe ausgewählt ist, die durch das N-Vinylpyrrolidon, das Styrol, das Vinylacetat, das Vinylacrylat, das Glycidylacrylat, das Hydroxyalkylacrylat, das Alkylmethacrylat, das Hydroxyalkylmethacrylat, das Acrylnitril und das Acrolein gebildet ist.

**5.** Verfahren nach einem der Ansprüche 1 bis 4, worin das Polymer oder das Copolymer eine Molmasse von 500 000 bis 20 000 000 besitzt und worin es in einer Konzentration von 500 bis 50 000 ppm in der wäßrigen Lösung, ausgedrückt in Gewicht, verwendet wird.

**6.** Verfahren nach einem der Ansprüche 1 bis 5, worin die wäßrige Lösung das Acrylamid-Homopolymer enthält.

**7.** Verfahren gemäß einem der Ansprüche 1 bis 6, worin die Lösung in eine Formation injiziert wird, deren Temperatur 10 bis 80°C, und bevorzugt 20 bis 70°C, beträgt.

**8.** Verfahren nach einem der Ansprüche 1 bis 7, worin der Salzgehalt der Formation 20 bis 200 g/l, ausgedrückt in Natriumchlorid, beträgt.

**Claims**

**1.** A process for the improved recovery of hydrocarbons by selective reduction of the permeability of at least a portion of an underground formation producing said hydrocarbons to water, in which glyoxal and an aqueous solution of a non-ionic polyacrylamide or a copolymer of a non-ionic and non-hydrolysed acrylamide and at least one other comonomer is injected by at least one injection well or at least one production well, under suitable conditions, said copolymer containing less than 5% of N-alkyl substituted groups, injection into the formation is stopped for a period sufficient to permit the formation in situ of an appropriate gel by cross-linking, and water is injected into the injection well in the case of an injection well or production from the well is recommenced in the case of a production well, the process being characterised in that cross-linking is effected at a pH of less than 7.5 by injection of a quantity of glyoxal such that the molar ratio of glyoxal/polyacrylamide or acrylamide copolymer is less than 0.2.

**2.** A process according to claim 1, in which the pH of the solution on cross-linking is between 5.5 and 7.5, preferably between 6 and 7, and in which it is selected so that the time required for gel formation is at least 12 hours, preferably 15 to 72 hours.

**3.** A process according to claim 1 or claim 2, in which the molar ratio of glyoxal/polyacrylamide or acrylamide copolymer is between 0.002 and 0.1.

**4.** A process according to any one of claims 1 to 3, in which the comonomer is an unsaturated compound selected from the group formed by N-vinylpyrrolidone, styrene, vinyl acetate, an alkyl acrylate, glycidyl acrylate, a hydroxyalkyl acrylate, an alkyl methacrylate, a hydroxyalkyl methacrylate, acrylonitrile and acrolein.

**5.** A process according to any one of claims 1 to 4, in which the polymer or copolymer has a molecular weight of 500,000 to 20,000,000 and in which it is used in a concentration of 500 to 50,000 parts per million in an aqueous solution, in parts by weight.

**6.** A process according to any one of claims 1 to 5, in which the aqueous solution contains acrylamide homopolymer.

**7.** A process according to any one of claims 1 to 6, in which the solution is injected into a formation with a temperature of 10°c to 80°C, preferably 20°C to 70°C.

**8.** A process according to any one of claims 1 to 7, in which the salt content in the formation is 20 to 200 g/l, expressed as NaCl.